# EUROPÄISCHE PATENTANMELDUNG

(11) **EP 0 957 357 A1**
(43) Veröffentlichungstag der Anmeldung: **17.11.1999**
(21) Anmeldenummer: 99108807.1
(22) Anmeldetag: 04.05.1999
(51) Int. Cl.: G01N 27/409, G01N 27/41

(54) **Gehäuse für einen Gassensor mit zylindrischer, poröser, aus gesintertem Pulver bestehender Schutzkappe mit Bohrung an der Stirnseite**

(30) Priorität: 11.05.1998 DE 19820712; 14.07.1998 DE 19831455
(71) Anmelder: Heraeus Electro-Nite International N.V., 3530 Houthalen (BE)
(72) Erfinder: van Geloven, Peter Dr., 3221 Holsbeek (BE); Cappa, Guido Gustaaf Antoon, 3530 Houthalen (BE)
(74) Vertreter: Kühn, Hans-Christian

(57) **Zusammenfassung**

Die Erfindung betrifft ein Gehäuse (1) für einen Gassensor, insbesondere zur Abgasmessung von Verbrennungsanlagen, mit einer porösen Schutzkappe (3) an dem zum Hineinragen in das zu messende Gas bestimmten Teil des Gehäuses (1), wobei die im wesentlichen zylindrische Schutzkappe (3) aus einem gesinterten Pulver hergestellt ist und Poren mit einem mittleren Durchmesser im Bereich von 1 µm bis 950 µm aufweist. Weiterhin befindet sich an der Stirnfläche (5) der porösen, zylindrischen Schutzkappe (3), etwa senkrecht zur Gasstromrichtung eine durchgehende Bohrung (6) mit einem Durchmesser ≥ ein Zehntel des Innendurchmessers der Schutzkappe. Diese Konstruktion verbessert den Gasfluß durch die Schutzkappe zum Sensorelement hin. Durch katalytisch wirksame Zusätze, die in den Poren der Schutzkappe eingelagert werden können, wird das Sensorelement außerdem vor bestimmten Schadstoffeinwirkungen geschützt bevor diese überhaupt bis zum Sensorelement vordringen.

## Beschreibung

Die Erfindung betrifft ein Gehäuse für einen Gassensor, insbesondere zur Abgasmessung Von Verbrennungsanlagen, mit einer porösen Schutzkappe an dem zum Hineinragen in das zu messende Gas bestimmten Teil des Gehäuses.

Eine gattungsgemäße poröse Schutzkappe für einen Sauerstoffsensor ist aus US 4,466,880 bekannt. Diese Schutzkappe ist aus gesinterter Metallwolle hergestellt und dient dazu Schockeinwirkungen thermischer oder mechanischer Art abzufangen und dadurch das Sensorelement selbst zu schützen. Wegen der geringen thermischen Masse dieser Metallwolle ist die thermische Pufferkapazität und dadurch auch der thermische Schutz oft unzureichend. Der Gasfluß, der zum Sensorelement gelangt, wird durch die Porosität der Schutzkappe auf 0,9 bis 1,6 l/cm² min begrenzt, was bei schnellem Wechsel der Gaszusammensetzung, wie es im Abgasstrom eines Kraftfahrzeuges durchaus möglich ist, zu unerwünscht langen Reaktionszeiten des Sensors führt.

Es ist deshalb Aufgabe der vorliegenden Erfindung unter Vermeidung der vorbeschriebenen Nachteile. der bekannten porösen Schutzkappe den Gasfluß durch die Schutzkappe zum Sensorelement zu verbessern und eine Möglichkeit zum Einbringen von Zusätzen in das Schutzkappenmaterial zu schaffen.

Die vorstehende Aufgabe wird dadurch gelöst, daß die poröse, im wesentlichen zylindrische Schutzkappe aus einem gesinterten Pulver hergestellt ist und Poren mit einem mittleren Durchmessem im Bereich von 1 µm bis 950 µm aufweist und daß an der Stirnfläche der porösen, zylindrischen Schutzkappe eine durchgehende Bohrung, etwa senkrecht zur Gasstromrichtung, mit einem Durchmesser, der größer oder gleich ist als ein Zehntel des Innendurchmessers der Schutzkappe, angeordnet ist.

Die Schutzkappe soll eine zylindrische Form aufweisen, wobei der Übergang zwischen Mantelfläche und Stirnfläche abgerundet und auch die Stirnfläche selbst sphärisch ausgebildet sein kann. Das Sensorelement ist zentral innerhalb des von der Schutzkappe umschlossenen Volumens angeordnet. Dadurch, daß die poröse Schutzkappe auf pulvermetallurgischem Wege, d.h. durch Pressen und Sintern eines Pulvers (Metall oder/und Keramik) hergestellt ist, weist sie eine Porosität auf, die zusammen mit der Bohrung in der Stirnfläche der Schutzkappe für optimalen Gasfluß sorgt. Der mittlere Porendurchmesser liegt im Bereich zwischen 1 µm und 950 µm, wobei eine Pore im Sinne der Erfindung, - selbst wenn sie als gewundener, durchgehender Kanal ausgebildet ist -, sich von der durchgehenden Bohrung dadurch unterscheidet, daß der Durchströmungswiderstand der Pore immer größer ist als der Durchströmungswiderstand der Bohrung. Durch diese konstruktive Maßnahmen wird im inneren Hohlraum der Schutzkappe ein kleiner Unterdruck erzeugt, der sogleich durch verstärktes Ansaugen des Gases aus dem Abgasstrom ausgeglichen wird. Gleichzeitig wird aber eine thermische Schockeinwirkung vermieden, weil das Gas beim Durchqueren der Poren aufgeheizt oder abgekühlt wird. Die relativ große Masse der Schutzkappe wirkt dabei als thermischer Puffer. Die durch die Herstellweise (Sintern von Pulver) ausgebildete Porosität erleichtert außerdem das Einbringen von Zusätzen, wie beispielsweise Eintauchen der Schutzkappe in eine metallorganische Lösung, die nach dem Eintauchen thermisch zersetzt wird. Die aktiven Elemente dieser Lösung können mit für das Sensorelement schädlichen Gaskomponenten des Abgases reagieren und so vermeiden, daß diese schädlichen Komponenten zum Sensorelement selbst gelangen. Diese Zusätze können weiterhin in der Weise katalytisch wirken, daß sie das zu messende Abgas ins chemische Gleichgewicht bringen. Eine direkt auf dem Gassensorelement aufzubringende Schutzschicht kann sich dadurch erübrigen.

Vorteilhafte Weiterbildungen der Erfindung sind in den Unteransprüchen ausgeführt, wonach es sich als besonders vorteilhaft erwiesen hat, wenn die Bohrung an der Stirnseite der porösen Schutzkappe einen Durchmesser von etwa 5 mm aufweist, wobei der Innendurchmesser der porösen Schutzkappe 10 mm beträgt. Das Verhältnis von Bohrungsdurchmesser / Innnendurchmesser der Schutzkappe ist von besonderer Bedeutung und beträgt vorzugsweise 0,5.

Als weitere vorteilhafte Ausführungsform der Erfindung wird eine Konstruktion betrachtet, bei der an der Stirnseite der porösen Schutzkappe, die Bohrung umschließend ein metallisches Rohrstück mit einer Länge von bis zu 5 mm in den Gasstrom ragend angesetzt ist, das den gleichen Innendurchmesser wie die Bohrung aufweist. Der oben beschriebene Venturi-Effekt wird durch einen derartigen Rohraufsatz noch verstärkt.

Als Sinterpulver zur Herstellung der porösen Schutzkappe wird ein Metallpulver und/oder ein Keramikpulver bevorzugt.

Zur weiteren verbesserung der Funktion der Schutzkappe können Zusätze in die Poren eingebracht werden. Diese Zusätze sollen eine katalytische Wirkung haben, die etwaige Schadstoffe im Abgas, wie beispielsweise Schwefel oder Schwefelverbindungen, Phosphor oder Phosphorverbindungen oder Silizium oder Siliziumverbindungen katalytisch umsetzen oder binden, bevor sie an das Sensorelement gelangen. Hierfür haben sich wasserlösliche, metallorganische Kupferverbindungen als zweckmäßig erwiesen, in die die poröse Schutzkappe eingetaucht wird. Die Poren saugen die Lösung an und eine nachträgliche thermische Behandlung führt zur Bildung von feinverteiltem Kupferoxid, das den im Abgas enthaltenen Schwefel unter Bildung von Kupfersulfid bindet.
Man kann aber auch bei der Herstellung der Schutzkappe Zusätze wie Calciumtitanat (CaTiO₃) oder Aluminiumoxid (Al₂O₃) oder Magnesiumoxid (MgO) oder Magnesiumspinell (MgAl₂O₄) oder eine Mischung von diesen zugeben, die mit Phosphor oder Silizium reagieren. Edelmetallzusätze wie Platin, Rhodium, Iridium oder Palladium oder deren Legierungen können ebenfalls durch Eintauchen der porösen Schutzkappe in eine Lösung dieser Metalle in die Poren eingebracht werden. Die Edelmetalle und ihre Legierungen sind katalytisch wirksam, so daß sie die Abgaskomponenten ins chemische Gleichgewicht bringen.

Gegenstand der Erfindung ist auch die Schutzkappe selbst, sowie ihr Einsatz in einem Gehäuse beispielsweise für einen Temperatursensor.

Die Erfindung wird nachfolgend anhand von Zeichnungen erläutert.

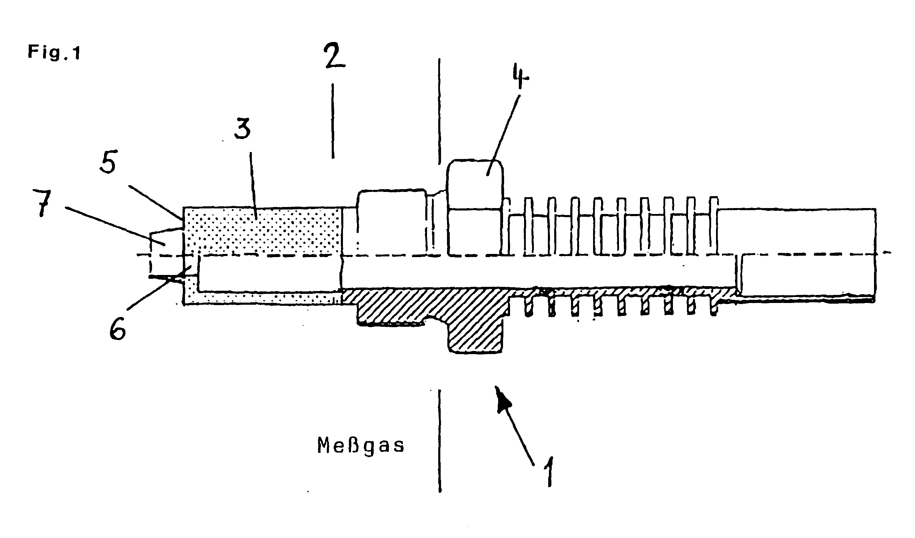

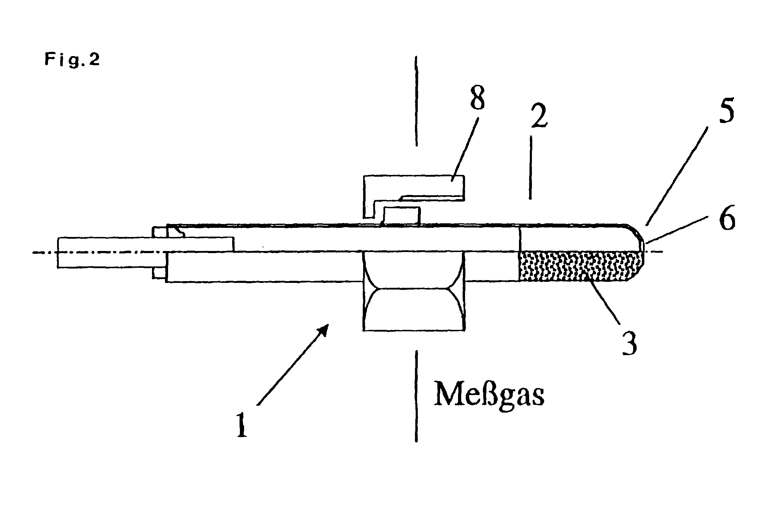

In der Figur 1 ist in einer teiweisen Querschnittszeichnung ein erfindungsgemäßes Gehäuse 1 für einen Gassensor dargestellt. An dem zum Hineinragen in den Meßgasstrom bestimmten Teil 2 des Gehäuses 1 ist die poröse Schutzkappe 3 mit einem Außendurchmesser von 12 mm angeordnet. In dem von der Schutzkappe 3 umschlossenen Hohlraum befindet sich das Sensorelement (in der Figur nicht dargestellt), das ein potentiometrischer oder amperometrischer Gassensor sein kann. Der Gassensor detektiert oxidierbare oder reduzierbare Gasbestandteile wenn das Sensorelement in dem erfindungsgemäßen Gehäuse 1 in den Abgasstrom von Verbrennungsanlagen angeordnet wird. Das Gehäuse wird üblicherweise mit Hilfe des Sechskantmutter 4 senkrecht zur Gasstromrichtung von außen in ein das Meßgas führendes Abgasrohr eingeschraubt. Es kann aber auch mit einer Überwurfmutter 8 (siehe Figur 2) eingeschraubt werden.
An der Stirnseite 5 der zylindrischen Schutzkappe 3 befindet sich eine Bohrung 6 mit dem Durchmesser 5 mm, auf die ein kurzes, metallisches Rohrstück 7 gleichen Innendurchmessers wie die Bohrung 6 aufgesetzt ist. Die Länge des Rohrstücks 7 beträgt 4 mm. Der Gaszutritt zum Sensorelement erfolgt durch die Poren der porösen Schutzkappe 3, der Gasaustritt im wesentlichen durch die Bohrung 6 an der Stirnseite 5 der Schutzkappe 3, so daß die Konstruktion der Schutzkappe 3 hinsichtlich des Gasstroms insgesamt einen Venturi-Effekt zeigt. Die Porosität der Schutzkappe 3 ist durch Poren mit den Durchmessern im Bereich von 1 m bis 1000 µm gekennzeichnet, die sich beim Sintern eines Metall- und/oder Keramikpulvers ausbilden.

Figur 2 stellt ein weiteres erfindungsgemäßes Gassensorgehäuse 1 mit einer porösen Schutzkappe 3 dar. In diesem Fall fehlt das metallische Rohrstück 7. Die Schutzkappe 3 weist lediglich eine Bohrung 6 mit dem Durchmesser 3 mm auf, wobei der Innendurchmesser der Schutzkappe 3 6 mm beträgt. Anstelle der Sechskantmutter 4 aus Figur 1 ist hier eine Überwurfmurter 8 vorgesehen, um das Gehäuse 1 in ein das Meßgas führendes Abgasrohr einzuschrauben.

## Patentansprüche

1. Gehäuse für einen Gassensor, insbesondere zur Abgasmessung von Verbrennungsanlagen, mit einer porösen Schutzkappe an dem zum Hineinragen in das zu messende Gas bestimmten Teil des Gehäuses, dadurch gekennzeichnet, daß die poröse, im wesentlichen zylindrische Schutzkappe aus einem gesinterten Pulver hergestellt ist und Poren mit einem mittleren Durchmessem im Bereich von 1 µm bis 950 µm aufweist und daß an der Stirnfläche der porösen, zylindrischen Schutzkappe eine durchgehende Bohrung, etwa senkrecht zur Gasstromrichtung, mit einem Durchmesser, der größer oder gleich ist als ein Zehntel des Innendurchmessers der Schutzkappe angeordnet ist.

2. Gehäuse für einen Gassensor mit poröser Schutzkappe nach Anspruch 1, dadurch gekennzeichnet, daß die Bohrung an der Stirnseite der porösen Schutzkappe einen Durchmesser von ≥ 1mm aufweist.

3. Gehäuse für einen Gassensor mit poröser Schutzkappe nach Anspruch 1 oder 2, dadurch gekennzeichnet, daß die Bohrung an der Stirnseite der porösen Schutzkappe einen Durchmesser von etwa 5 mm aufweist.

4. Gehäuse für einen Gassensor mit poröser Schutzkappe nach einem der Ansprüche 1 bis 3, dadurch gekennzeichnet, daß an der Stirnseite der porösen Schutzkappe, die Bohrung umschließend ein metallisches Rohrstück mit einer Länge von bis zu 5 mm in den Gasstrom ragend angesetzt ist, das den gleichen Innendurchmesser wie die Bohrung aufweist.

5. Gehäuse für einen Gassensor mit einer porösen Schutzkappe nach einem der Ansprüche 1 bis 4, dadurch gekennzeichnet, daß die poröse Schutzkappe aus einem Material gebildet wird, das ein gesintertes Metallpulver und/oder ein gesintertes Keramikpulver umfaßt.

6. Gehäuse für einen Gassensor mit einer porösen Schutzkappe nach Anspruch 1 oder 5, dadurch gekennzeichnet, daß das die poröse Schutzkappe bildende Material Zusätze enthält, die katalytisch wirksam sind und/oder eine Getterwirkung gegenüber für das Gassensorelement schädlichen Abgaskomponenten zeigen.

7. Gehäuse für einen Gassensor mit einer porösen Schutzkappe nach Anspruch 6 , dadurch gekennzeichnet, daß als Zusatz mit Getterwirkung ein Phosphor- oder Silizium- oder Schwefel-bindendes Material verwendet wird.

8. Gehäuse für einen Gassensor mit einer porösen Schutzkappe nach Anspruch 6, dadurch gekennzeichnet, daß als Zusatz eine Kupferverbindung oder Calciumtitanat oder Aluminiumoxid oder Magnesiumoxid oder Magnesiumspinell oder ein Edelmetall aus der Reihe Pt, Rh, Ir, Pd oder deren Legierungen oder eine Mischung aus diesen Zusätzen verwendetwird.
